# EUROPÄISCHE PATENTANMELDUNG

(11) **EP 0 856 596 A2**
(43) Veröffentlichungstag der Anmeldung: **05.08.1998**
(21) Anmeldenummer: 97118512.9
(22) Anmeldetag: 24.10.1997
(51) Int. Cl.: C23G 1/36

(54) **Filtervorrichtung für die Fluid-Standzeitverlängerung**

(30) Priorität: 11.01.1997 DE 19700761
(71) Anmelder: Hydac Filtertechnik GmbH, 66280 Sulzbach/Saar (DE)
(72) Erfinder: Zachmann, Mario, Dipl.-Ing., 04509 Delitsch (DE); Kimmerle, Klaus, Dr.-Ing., 66424 Homburg (DE)
(74) Vertreter: Patentanwälte Bartels und Partner

(57) **Zusammenfassung**

Die Erfindung betrifft eine Filtervorrichtung für die Verlängerung der Standzeit von Reinigungs- und Spülflüssigkeiten, insbesondere bei industriellen Waschmaschinen (10), die mindestens folgende Komponenten aufweisen,
- mindestens eine Querstromfiltereinheit (Q1,Q2),
- mindestens zwei Arbeitskammern (A1,A3) und
- mindestens zwei Ruhekammern (A2,A4).
Mit der erfindungsgemäßen Filtervorrichtung läßt sich insbesondere die Standzeit von Reinigungs- und Spülflüssigkeiten verlängern.

## Beschreibung

Die Erfindung betrifft eine Filtervorrichtung für die Verlängerung der Standzeit von Reinigungs- und Spülflüssigkeiten, insbesondere bei Reinigungsvorrichtungen, wie industrielle Waschmaschinen, umfassend einen Querstromfilter, Zwei Arbeitskammern und Zwei Beruhigungskammern.

Die angesprochenen Reinigungsvorrichtungen, wie industrielle Waschmaschinen, dienen dem Reinigen von Teilen aus der Produktion. Sie bestehen üblicherweise aus einem Waschraum, einer Waschmaschine, einer Umwälzpumpe und einem Tank. Werden die zu reinigenden Teile in der Waschmaschine gewaschen, dann erfährt die darin enthaltene Reinigungs- und/oder Spülflüssigkeit eine stetige Verschmutzung, so daß der Verschmutzungsgrad laufend zunimmt mit der Folge, daß nach einer gewissen Standzeit der Reinigungsflüssigkeit diese ausgetauscht werden muß.

Bei einem Austausch der Reinigungsflüssigkeit ist dieser mit Personalaufwand verbunden und führt zu Stillstandszeiten der Waschmaschine. Des weiteren weist die Reinigungsflüssigkeit keine konstante Waschkraft über die Dauer ihrer Standzeit auf und somit besitzen wiederum die gewaschenen Teile keine konstante Oberflächenqualität, was an und für sich wünschenswert wäre. Teile, die zu Beginn der Standzeit der Reinigungsflüssigkeit gewaschen werden, haben mithin eine bessere Oberflächenqualität wie Teile, die am Ende der Standzeit der Reinigungsflüssigkeit gewaschen werden. Dies beeinträchtigt eine kontinuierliche Fertigung in Serienfertigungsstraßen.

Durch die DE 43 12 546 C2 ist eine Verwertungsanlage für ein aus Emulsion und/oder Waschlaugen bestehendes wässriges Medium mit einem Speichertank zur Bereitstellung des zu verwertenden Mediums und mit einer dem Speichertank nachgeordneten Ultrafiltrationsanlage bekannt, bei der das Medium in einem Kreislauf zwischen einem Arbeitsbehälter und einem Filterelement geführt und aufkonzentriert wird, wobei eine der Ultrafiltrationsanlage nachgeordnete Verbrennungsanlage zur Verbrennung des aufkonzentrierten Mediums vorgesehen ist.

Durch die DE 41 23 827 C2 und die DE 43 12 426 C2 sind weitere Verfahren zur Aufbereitung einer wässrigen Reinigungsflüssigkeit bzw. von Prozeßabwässern bekannt auf der Grundlage einer Membranfiltration bzw. mit einer Ultrafiltrationsanlage.

Ausgehend hiervon liegt der Erfindung die Aufgabe zugrunde, eine Filtervorrichtung zu schaffen, mit der sich die Standzeit von Reinigungs- und Spülflüssigkeiten bei Reinigungsvorrichtungen, wie industriellen Waschmaschinen, verlängern läßt. Eine dahingehende Aufgabe löst eine Filtervorrichtung mit den Merkmalen des Anspruches 1.

Dadurch, daß gemäß dem kennzeichnenden Teil des Anspruches 1
- in Serie geschaltet, eine erste Beruhigungskammer, eine erste Arbeitskammer, eine Pumpe und ein Querstromfilter, das konzentratseitig sowohl mit der ersten Beruhigungskammer als auch mit der Arbeitskammer verbunden ist, einen Filtrationskreis bilden,
- daß in Serie geschaltet, eine zweite Beruhigungskammer, eine zweite Arbeitskammer, eine Pumpe und eine Reinigungsvorrichtung, die rücklaufseitig mit der Beruhigungskammer verbunden ist, einen Spülkreis bilden, und
- daß Spülkreis und Filtrationskreis so miteinander verschaltet sind, daß aufschwimmendes Öl oder sedimentierende Verunreinigungen in der Beruhigungskammer des Spülkreises in die Beruhigungskammer des Filtrationskreises gelangen und das Filtrat des Querstromfilters in den Spülkreis gespeist wird,
gelangt die verschmutzte Reinigungsflüssigkeit aus der Reinigungsvorrichtung zurück in die Filtervorrichtung und kann dort kontinuierlich im Bypass oder im Vollstrom aufbereitet werden, wobei eine konstant niedrige Schmutzkonzentration der Flüssigkeit erreichbar ist, was wiederum zu einer konstanten Oberflächenqualität der gereinigten, insbesondere der gewaschenen Teile führt.

Weitere vorteilhafte Ausführungsformen der erfindungsgemäßen Filtervorrichtung sind Gegenstand der Unteransprüche.

Im folgenden wird die erfindungsgemäße Filtervorrichtung anhand der Zeichnung näher erläutert.
Es zeigen in prinzipieller und nicht maßstäblicher Darstellung die
- Fig.1: in der Art eines Schaltplanes die Filtervorrichtung;
- Fig.2 und 3: in der Art eines Schaltplanes zwei Verwendungsmöglichkeiten der Filtervorrichtung nach der Fig.1.

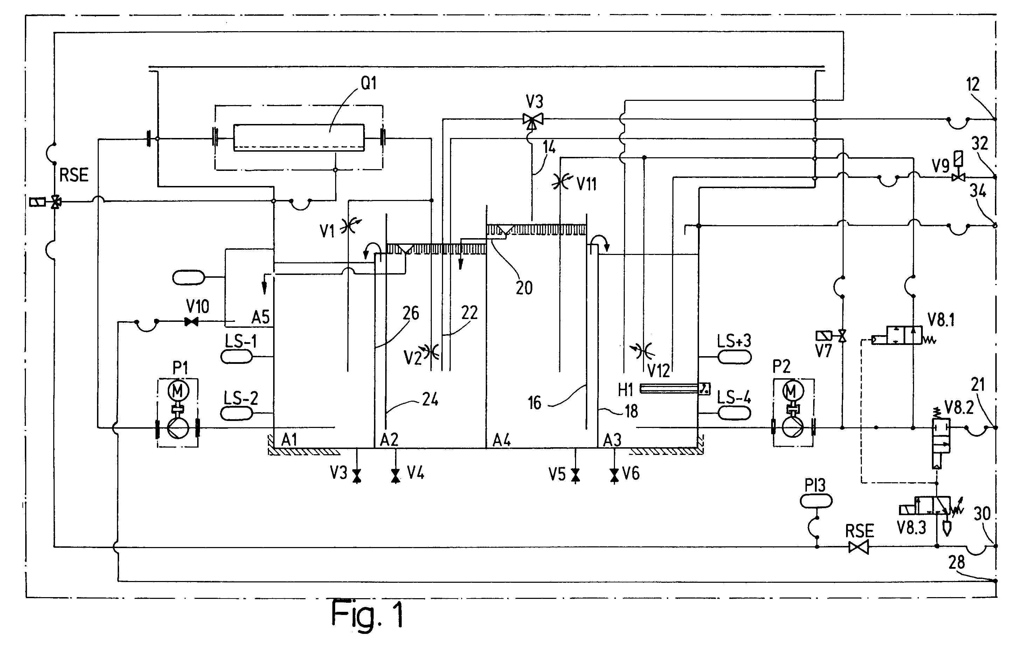

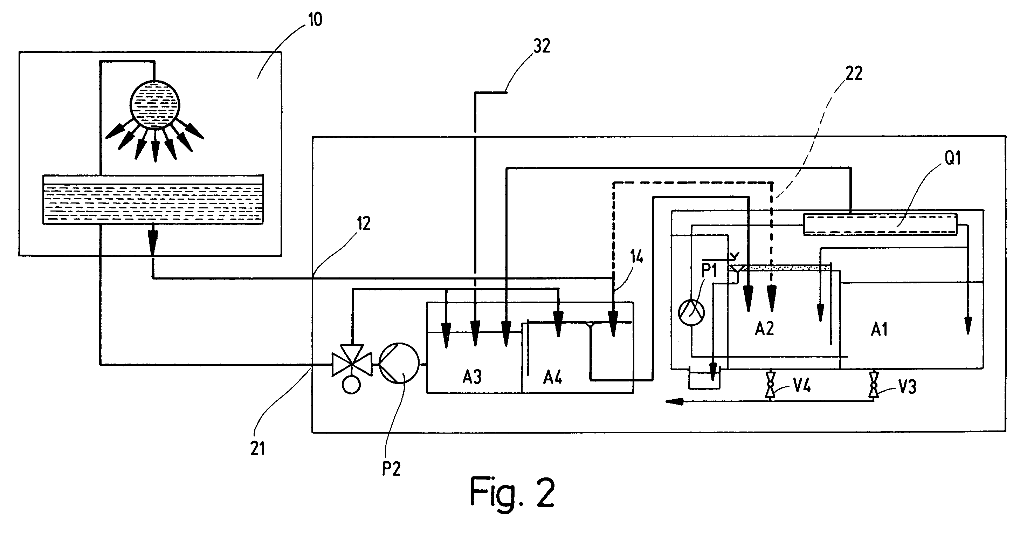

Ein im folgenden dargestelltes Vordrucksystem der Filtervorrichtung fördert eine erwärmte Reinigungsmittellösung mit einem vorgebbaren Förderdruck in eine externe Waschmaschine 10, wie sie als vereinfachte Blockdarstellung in der Fig.2 beispielhaft dargestellt ist. Die benutzte Reinigungsflüssigkeit wird über einen Anschluß 12, der den Rücklauf der Waschmaschine 10 darstellt, zurück in eine Beruhigungskammer A4 geführt, und zwar über eine Nebenstromleitung 14 (s.Fig.1).

In der Beruhigungskammer A4 verhindert ein heruntergezogenes Tauchblech 16 vor der Trennwand 18, daß das aufschwimmende Öl oder sedimentierende Verunreinigungen in eine Arbeitskammer A3 gelangt. Das aufschwimmende Öl oder die Verunreinigungen \verden mit Hilfe eines passiven Überlaufes 20 aus der Beruhigungskammer A4 in eine erste Beruhigungskammer A2 der Filtervorrichtung entfernt. Die Reinigungsflüssigkeit selbst fließt über die Trennwand 18 in die Arbeitskammer A3. Die in der Arbeitskammer A3 eingebaute Heizung H1 kann dabei die Reinigungsflüssigkeit erwärmen.

Benötigt die Waschmaschine 10 nun Reinigungsflüssigkeit, so fördert die Umwälzpumpe P2 die Reinigungsflüssigkeit aus der Arbeitskammer A3 mit einem vorgebbaren Arbeitsdruck in die Waschmaschine 10, und zwar über die Zulaufleitung 21, wobei das Ventil V8.1 geschlossen und das Ventil V8.2 geöffnet sind. Wird von der Waschmaschine 10 keine Reinigungsflüssigkeit benötigt, so wälzt die Umwälzpumpe P2 die Reinigungsflüssigkeit aus der Arbeitskammer A3 um. Ein kleiner Teilstrom wird dabei in die zweite Beruhigungskammer A4 der Filtervorrichtung zurückgeführt, wobei dann das Ventil V8.1 geöffnet und Ventil V8.2 geschlossen sind. Zur eigentlichen Fluidpflege der Reinigungsflüssigkeit wird über ein Ventil V7 ein Teilstrom der ersten Beruhigungskammer A2 zugeführt, die mit einer Querstromfiltereinheit Q1 zusammenwirkt. Über ein Ventil V3 kann darüber hinaus angesteuert werden, ob die über den Anschluß 12 kommende verschmutzte Reinigungsflüssigkeit ausschließlich über die Nebenstromleitung 14 in die zweite Beruhigungskammer A4 gelangt oder gegebenenfalls zumindest teilweise in einem Hauptstrom über die Hauptstromleitung 22 in die erste Beruhigungskammer A2. Die der Gesamt-Filtervorrichtung zuzuordnende Umwälzpumpe P2 bildet den eigentlichen Fluidantrieb der Waschmaschine, so daß diese einen eigenständigen Antrieb nicht mehr aufzuweisen braucht, was die Kosten dahingehender Waschmaschinen 10 senkt.

Das eigentliche Filtrationssystem der Filtervorrichtung, die auch als Filtrationskreis angesehen werden kann, bereitet die Wassermittellösung für die Waschmaschine 10 derart auf, daß die Standzeit dieser Lösung wesentlich verlängert wird. Das Befüllen der ersten Beruhigungskammer A2 des Filtrationssystems mit der verschmutzten Reinigungsmittellösung wird dabei vom Speiseventil geregelt.

In der ersten Beruhigungskammer A2 verhindert das heruntergezogene weitere Tauchblech 24 vor der weiteren Trennwand 26, daß das aufschwimmende Öl oder die sedimentierenden Verunreinigungen in die erste Arbeitskammer A1 gelangen können. Das aufschwimmende Öl wird mit Hilfe eines passiven Ölüberlaufes aus der ersten Beruhigungskammer A2 unmittelbar in einen Ölsammelbehälter A5 entfernt, der an einen Ölablaßanschluß 28 angeschlossen ist. Die vorbehandelte verschmutzte Reinigungsmittelflüssigkeit fließt mithin über die weitere Trennwand 26 in die erste Arbeitskammer A1.

Die Filtration wird durchgeführt, sobald die erste Arbeitskammer A1 bis zum Niveau eines oberen Niveauschalters LS + 1 befüllt ist. Die dem Filtrationskreis zugeordnete Umwälzpumpe P1 fördert nun die verschmutzte Reinigungsmittellösung mit höherer Strömungsgeschwindigkeit im Kreislauf durch die Querstomfiltereinheit Q1 und von dort zurück in die erste Arbeitskammer A1. Ein Teilstrom des im Querstromfilter Q1 aufkonzentrierten Konzentrates wird zurück in die Beruhigungskammer A2 geführt. Das Filtrat wiederum, also die gereinigte Reinigungsmittellösung, wird in die zweite Arbeitskammer A3 des Vordrucksystems der Filtervorrichtung wieder zurückgeführt.

Durch die hohe Strömungsgeschwindigkeit in den Kanälen der Querstromfiltereinheit Q1 wird verhindert, daß die Kanäle axial verblocken, um derart eine sich möglicherweise ausbildende Deckschicht auf der Membranoberfläche zu vermeiden oder in ihrem Umfang gering zu halten. Die dahingehende Überströmgeschwindigkeit der Rohlösung in der Querstromfiltereinheit Q1 läßt sich mit einer verstellbaren Drossel V1 einstellen. Gleichzeitig läßt sich mit der Drossel V1 der Ein- und Ausgangsdruck an der Querstromfiltereinheit Q1 regeln. Dabei gilt, je größer der Eingangsdruck an der Querstromfiltereinheit Q1 umso größer die Überströmgeschwindigkeit. Über einen Druckluftanschluß 30 läßt sich die Querstromfiltereinheit Q1 in regelmäßigen Zeitabständen rückspülen, um einer möglichen Verblockung der Filtereinheit vorzubeugen. Der gewünschte Druck der Rückspülung kann mit einem Druckminderventil RSE eingestellt und am Manometer PI3 kontrolliert werden. Darüber hinaus ist noch ein über ein Ventil V9 ansteuerbarer Befüllanschluß 32 vorgesehen, um die zweite Arbeitskammer A3 mit Reinigungsflüssigkeit zu befüllen. Über einen Notüberlauf 34 läßt sich zuviel in der Maschine 10 befindliche Reinigungsflüssigkeit ebenfalls in die zweite Arbeitskammer A3 zurückführen. Als Querstromfilter Q1 wird vorzugsweise ein Sempa-Membranelement SME aus Keramik eingesetzt.

Die Standzeitverlängerung wird also mittels eines kommunizierenden Tanksystems mit Arbeitskammer A1, Beruhigungskammer A2 und dem Phasentrenner realisiert, wobei dieser zwischen den Tanks A1 und A2 angebracht dafür sorgt, daß die aufschwimmende Oberphase abgeleitet werden kann und die Mittelphase in die erste Arbeitskammer A1 gelangt. Das Sediment verweilt am Behälterboden und kann zügig durch entsprechend angebrachte Ablaßhähne abgelassen werden. Durch die angesprochene Kombination der einzelnen Kammern besteht für aufschwimmende Öle mithin die Möglichkeit, zuerst den Phasentrenner im Spülkreis und dann den Phasentrenner im Filtrationskreis zu durchlaufen, uni anschließend aufkonzentriert zu werden. Das entstehende Filtrat wird in den Arbeitstank A3 des Spülkreises geleitet und verdünnt dort laufend die entstehende Verschmutzung durch die Waschstation oder Waschmaschine 10. Dies entspricht einer Aufbereitung der Reinigungsflüssigkeit im Bypassbetrieb.

Bei einer Aufbereitung der Reinigungsflüssigkeit im Vollstrom können in den Ruhekammern ebenfalls die Fluide separiert werden und die Feststoffe sedimentieren. Das Kammersystem des Spülkreises wird dann mit dem Filtrat des Filtrationskreises ausschließlich befüllt. Der Spülkreis und der Filtrationskreis können dann kontinuierlich betrieben werden, wohingegen die Waschmaschine 10 nur dann Flüssigkeit anfordert, wenn diese auch wirklich benötigt wird. Dadurch besteht die Möglichkeit, die Flüssigkeit im Arbeitstank des Spülkreises auf definiertem Schmutzniveau zu halten.

Die Fig.2 gibt den Anschluß der in der Fig.1 als Ganzes gezeigten Filtervorrichtung an die stationsartige Waschmaschine 10 wieder, wobei die Filtervorrichtung über die Anschlüsse 12 und 21 leicht von der Waschmaschine 10 trennbar ist. Die Filtervorrichtung 10 kann verfahrbar ausgebildet sein und an ihren Einsatzort, beispielsweise über Rollen, einen Verfahrwagen od.dgl., gebracht werden.

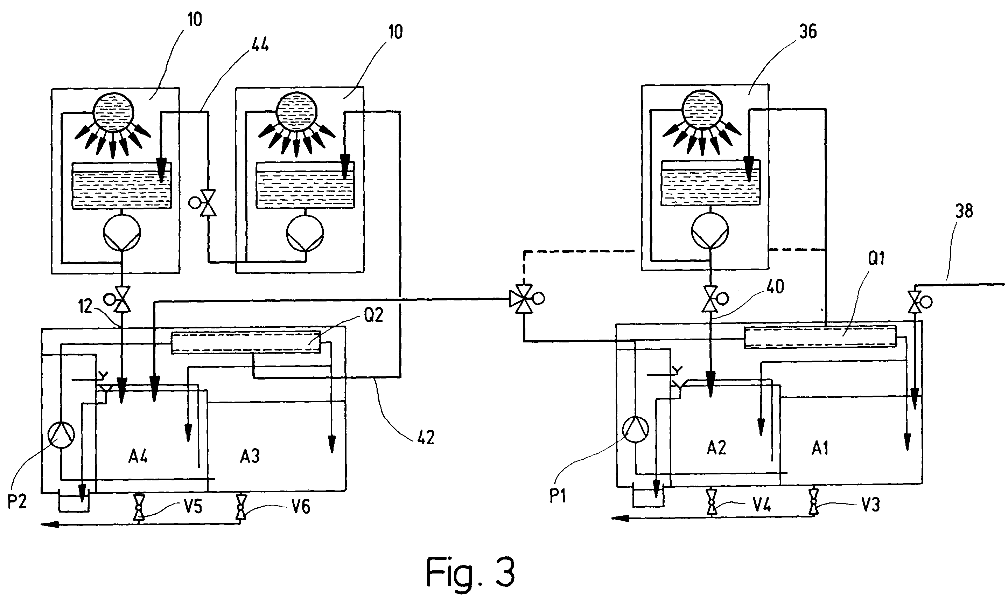

Die Fig.3 betrifft eine ergänzte Anwendung der Filtervorrichtung nach den Fig.1 und 2, wobei der einfacheren Darstellung wegen die zu einer Baueinheit geschlossenen Gesamtfunktionen in Einzeldarstellungen aufgelöst wurden. Des weiteren wird die Filtervorrichtung nach der Fig.3 mit einer weiteren Querstromfiltereinheit Q2 betrieben. Die Ausführungsform der Fig.3 weist neben den beiden in Reihe hintereinander geschalteten Waschmaschinen 10 noch eine Spülstation 36 auf, die die in der Waschmaschine 10 befindlichen Teile nachträglich zum Entfernen der Reinigungsflüssigkeit abspült.

Um zu vermeiden, daß es zu einer Verschleppung von Verschmutzungen aus den Waschmaschinen 10 in die Spülstation 36 kommt, muß der sich in Transportrichtung der Teile vor der Spülstation 36 befindliche Raum der Waschmaschine 10 sauberer sein als der Waschraum der davor geschalteten Waschmaschine 10. Nur dann ist es möglich, daß keine Verschleppung in den Spülraum erfolgt.

Die vorliegende Filtervorrichtung für die Anwendung nach der Fig.3 vereinigt eine Umkehrosmose- oder Nanofiltrationsanlage A1, A2, Q1 mit einer Ultraoder Mikrofiltrationsanlage A3, A4, Q2. Das Gesamtgerät hat vier Anschlüsse, einen Zulauf 38 von frischem Spülwasser, einen Rücklauf 40 für gebrauchtes Spülwasser, einen Ablauf 42 an frischer Reinigungsflüssigkeit, der filtratseitig an die Querstromfiltereinheit Q2 angeschlossen ist, sowie einen Rücklauf 12 für die gebrauchte Reinigungsflüssigkeit. Über entsprechende Ablaßhähne kann einmal das Konzentrat der Ultrafiltrationsanlage abgelassen werden und zum anderen das Konzentrat der Umkehrosmose bzw. der Nanofiltrationsanlage.

Das Filtrat der Nanofiltrationsanlage A1,A2,Q1 wird in die Spülstation 36 geführt und sorgt dort für eine konstante Qualität. Verbrauchte Spülflüssigkeit wird zurückgeleitet in die erste Beruhigungskammer A2 dieser Anlage. Auch hier können in der ersten Beruhigungskammer A2 eventuell vorhandene Oberphasen aufschwimmen und Sedimente sich absetzen. Die Mittelphase gelangt in die erste Arbeitskammer A1 dieser Umkehrosmoseanlage. Eventuell nachzudosierendes Frischwasser gelangt über den Zulauf 38 über die erste Arbeitskammer A1 und die Querstromfiltereinheit Q1 zumindest teilweise in die Ruhekammer A2, so daß auch das Frischwasser den Umkehrosmose- bzw. Nanofiltrationsmembranen der Querstromfiltereinheit Q1 zugeleitet wird. Das Konzentrat der Umkehrosmoseeinheit gelangt, wie sich dies aus der strichlinierten Leitungswiedergabe nach der Fig.3 ergibt, in die zweite Beruhigungskammer A4 der Ultrafiltrationsanlage A3,A4,Q2. Das Konzentrat kann als Oberphase aufschwimmen oder sedimentieren.

Die Mittelphase gelangt in die zweite Arbeitskammer A3 und kann dort zusammen mit der verbrauchten Reinigungsflüssigkeit aus der in Blickrichtung auf die Fig.3 gesehen linken ersten Waschzone ultrafiltriert werden. Das Filtrat wird dann in die andere Waschmaschine 10 und mithin in die rechte Waschzone 2 gegeben, d.h. in die Waschmaschine 10, die im letzten Arbeitsgang die Teile vor deren Weiterleiten an die Spülstation 36 reinigt. Dadurch wird in der Waschzone 2 eine konstant höhere Qualität erzeugt als in der davorliegenden Waschzone 1. Über eine einen Überlauf bildende Verbindungsleitung 44 läuft die Reinigungsflüssigkeit aus der rechts in Fig.3 dargestellten Waschzone 2 in die links gegenüberliegende Waschzone 1 Dadurch entsteht ein Verschmutzungsgradient zwischen Waschzone 2 und Waschzone 1, wobei aus Waschzone 1 die verbrauchte Reinigungsflüssigkeit wieder zurück in die Ultrafiltrationsanlage A3,A4,Q2 geführt wird.

Die Filtervorrichtung braucht auf die vorbeschriebenen Anwendungsfälle nicht beschränkt zu sein, sondern kann im vielfältigen Bereich von Wasch- und Spülmaschinen eingesetzt werden. Vorzugsweise lassen sich bei den vorbeschriebenen Filtervorrichtungen die Filterkomponenten, insbesondere in Form des Querstromfilters, zweier Arbeitskammern sowie zweier Beruhigungskammern, in einer Baueinheit zusammenfassen.

## Patentansprüche

1. Filtervorrichtung für die Verlängerung der Standzeit von Reinigungs- und Spülflüssigkeiten, insbesondere bei Reinigungsvorrichtungen, wie industriellen Waschmaschinen, umfassend einen Querstromfilter (Q1), zwei Arbeitskammern (A1, A3 ) und zwei Beruhigungskammern (A2, A4), dadurch gekennzeichnet,
- daß in Serie geschaltet, eine erste Beruhigungskammer (A2), eine erste Arbeitskammer (A1), eine Pumpe (P1) und ein Querstromfilter (Q1), das konzentratseitig sowohl mit der ersten Beruhigungskammer (A2) als auch mit der Arbeitskammer (A1) verbunden ist, einen Filtrationskreis bilden,
- daß in Serie geschaltet, eine zweite Beruhigungskammer (A4), eine zweite Arbeitskammer (A3), eine Pumpe (P2) und eine Reinigungsvorrichtung, die rücklaufseitig mit der Beruhigungskammer (A4) verbunden ist, einen Spülkreis bilden, und
- daß Spülkreis und Filtrationskreis so miteinander verschaltet sind, daß aufschwimmendes Öl oder sedimentierende Verunreinigungen in der Beruhigungskammer (A4) des Spülkreises in die Beruhigungskammer (A2) des Filtrationskreises gelangen und das Filtrat des Querstromfilters in den Spülkreis gespeist wird.

2. Filtervorrichtung nach Anspruch 1, dadurch gekennzeichnet, daß die beiden Beruhigungskammern (A2, A4) einander benachbart derart angeordnet sind, daß aufschwimmendes Öl oder aufschwimmende Verunreinigungen in der zweiten Beruhigungskammer (A4) über einen passiven Überlauf (20) in die erste Beruhigungskammer (A2) gelangen.

3. Filtervorrichtung nach Anspruch 1 oder 2, dadurch gekennzeichnet, daß der Rücklaufanschluß (12) der Reinigungsvorrichtung zur Leitung eines Hauptstromes (22) mit der ersten Beruhigungskammer (A2) und zur Leitung eines Nebenstromes (14) mit der zweiten Beruhigungskammer (A4) verbunden ist.

4. Filtervorrichtung für die Verlängerung der Standzeit von Reinigungs- und Spülflüssigkeiten, insbesondere bei Reinigungsvorrichtungen, wie industriellen Waschmaschinen, umfassend einen Querstromfilter (Q1), zwei Arbeitskammern (A1, A3) und zwei Beruhigungskammern (A2,A4), dadurch gekennzeichnet,
- daß in Serie geschaltet, eine erste Beruhigungskammer (A2), eine erste Arbeitskammer (A1), eine Pumpe (P1) und ein Querstromfilter (Q1), das konzentratseitig sowohl mit der ersten Beruhigungskammer (A2) als auch mit der ersten Arbeitskammer (A1) verbunden ist, einen Filtrationskreis für eine der Reinigungsvorrichtung (10) nachgeschaltete Spülstation (36) bilden,
- wobei der Filtratanschluß des Querstromfilters (Q1), die Spülstation (36), die erste Beruhigungskammer (A2), die erste Arbeitskammer (A1), die Pumpe (P1) und das Querstromfilter (Q1) in Serie geschaltet, einen Spülkreis bilden, und
- daß in Serie geschaltet, eine zweite Beruhigungskammer (A4), eine zweite Arbeitskammer (A3), eine Pumpe (P2) und ein Querstromfilter (Q2), das konzentratseitig sowohl mit der zweiten Beruhigungskammer (A4) als auch mit der zweiten Arbeitskammer (A3) verbunden ist, einen zweiten Filtrationskreis für die Reinigungsflüssigkeit bilden,
- wobei der Filtratanschluß des Querstromfilters (Q2), die Waschmaschine, die zweite Beruhigungskammer (A4), die zweite Arbeitskammer (A3), die Pumpe (P2) und das Querstromfilter (Q2) in Serie geschaltet, einen Reinigungsmittelkreis bilden.

5. Filtervorrichtung nach Anspruch 4, dadurch gekennzeichnet, daß der ersten Arbeitskammer (A1) Frischwasser zuführbar ist und daß der Ausgang der ersten Arbeitskammer (A1) an den Eingang der zweiten Beruhigungskammer (A4) angeschlossen ist.
